Europäisches Patentamt

European Patent Office

Office européen des brevets

(19)

(11) Publication number: **0 231 043**

**A1**

(12) # EUROPEAN PATENT APPLICATION

(21) Application number: **87200049.2**

(22) Date of filing: **15.01.87**

(51) Int. Cl.³: **A 01 K 5/02**
**B 65 D 88/30**

(30) Priority: **16.01.86 NL 8600086**

(43) Date of publication of application:
**05.08.87 Bulletin 87/32**

(84) Designated Contracting States:
**AT BE CH DE ES FR GB GR IT LI LU NL SE**

(71) Applicant: **Multinorm B.V.**
**Hoofdweg 1278 P.O. Box 1000**
**NL-2150 BA Nieuw-Vennep(NL)**

(72) Inventor: **Borgman, Fokke Pieter**
**J.B. Kanweg 92**
**NL-9439 TH Witteveen(NL)**

(74) Representative: **Hoorweg, Petrus Nicolaas et al,**
**OCTROOIBUREAU ARNOLD & SIEDSMA Sweelinckplein**
**1**
**NL-2517 GK The Hague(NL)**

(54) Method and device for provisioning one or more feed locations.

(57) A method and device for provisioning one or more feed locations (1) accessible to cattle, each provided with a feed bin (5) equipped with a controlled dosage device (7), said method being distinguished in that the cattle feed is packed in a predetermined uniform discrete quantity, is stored in this packed form, is transported using mechanical conveying means to the feed location (1) and is placed in the packaging at the feed location as supply for consumption, conceivable here is a supply of ± 700 kg; said device being distinguished in that each feed location (1) is formed with an inlet opening (8) connected to the dosage device (7) and the supplying means are formed by a displaceable holder (11) which forms the packaging of the cattle feed, the holder (11) having an outlet opening (12) suitable for co-operation with the inlet opening of the dosage device (7).

EP 0 231 043 A1

FIG.2

Method and device for provisioning one or more feed
locations.

---

The invention relates to a method and device for
provisioning one or more feed locations accessible to
cattle, each provided with a feed bin equipped with a
controlled dosage device.

It is usual on modern cattle farms to equip feed
locations with animal recognition systems. For this purpose
the animal is fitted with an electronic recognition
circuit, in the form of a chip which in each case transmits
the relevant information concerning the animal to a
receiver unit at the permanently arranged feed location.
The receiver unit controls the dosage device so that the
animal is allotted the correct dosage of feed. The feed
locations are usually centrally provisioned from a
comparatively large storage silo whereby the connection
between silo and feed locations is realized by conveyor
tubes. Such a system requires a considerable investment in
the tube system, whereby there is the additional resulting
drawback that, once installed, the system is difficult to
alter.

The invention has for its object to obviate the said
drawback and to this end provides a method which is
distinguished in that the cattle feed is packed in a
predetermined uniform discrete quantity, is stored in this
packed form, is transported using mechanical conveying
means to the feed location and is placed in the packaging
at the feed location as supply for consumption. Conceivable
here is a supply of ± 700 kg.

The device according to the invention suitable for
performing the above method consists substantially of one
or more feed locations provided with a separately
controllable dosage device, and means for supplying these
feed locations, this device according to the invention
being distinguished in that each feed location is formed
with an inlet opening connected to the dosage device and
the supplying means are formed by a displaceable holder //

which forms the packaging of the cattle feed, the holder having an outlet opening suitable for co-operation with the inlet opening of the dosage device.

The advantage of such a system is that the cattle farmer can have in stock a desired, random number of holders, or 700 kg., and can take them as the situation requires to random feed locations, thereby ensuring the supply for a determined period. The system can be altered exceptionally easily and is not restricted to for example the shed, but the feed locations can also be situated in the meadow. The filling of the holder can be carried out by means of one or more storage silos set up on the farm, whether or not filled with feed of different types, but can also take place at the premises of the cattle feed supplier.

A very flexible supplying system for feed locations, if necessary with different sorts of feed, is therefore realized using the method and device proposed by the invention.

In a preferred embodiment the device according to the invention is further characterized by a frame which carries the holder, the frame being provided with a coupling member co-operating with the three-point suspension of an agricultural tractor.

In this way transportation on the farm can be carried out with the usual agricultural tractor.

An especially inexpensive embodiment consists of the holder being a sack manufactured from flexible material.

The invention will be further explained in the figure description of an embodiment following below.

In the drawing:

Fig. 1 shows a supply system for a number of feed locations in a cattle-shed in accordance with the conventional system,

fig. 2 shows a schematic, upright view of a cattle feed location which is provisioned according to the method of the invention.

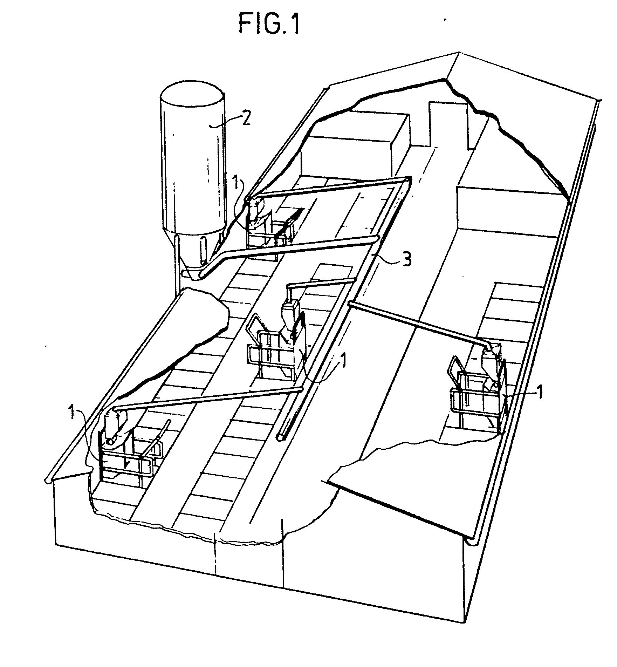

In fig. 1 is drawn a cattle-shed in top view, the roof of which is partly broken away in order to indicate more clearly the position of the cattle feed locations.

Arranged outside the shed is a storage silo 2, whereby the outlet opening is connected via a system of tubes 3 to the separate cattle feed locations. Transportation of the cattle feed through the tubes can be carried out in any appropriate manner, for example pneumatically or also using screw jacks. In view of the fact that this is a conventional system falling outside the frame of reference of the invention, it will not be elucidated further. It will be apparent that such a system requires a relatively large investment because of the system of tubes to be arranged in the shed. Changing the cattle feed locations 1 in the shed likewise requires adaptation of the system of tubes.

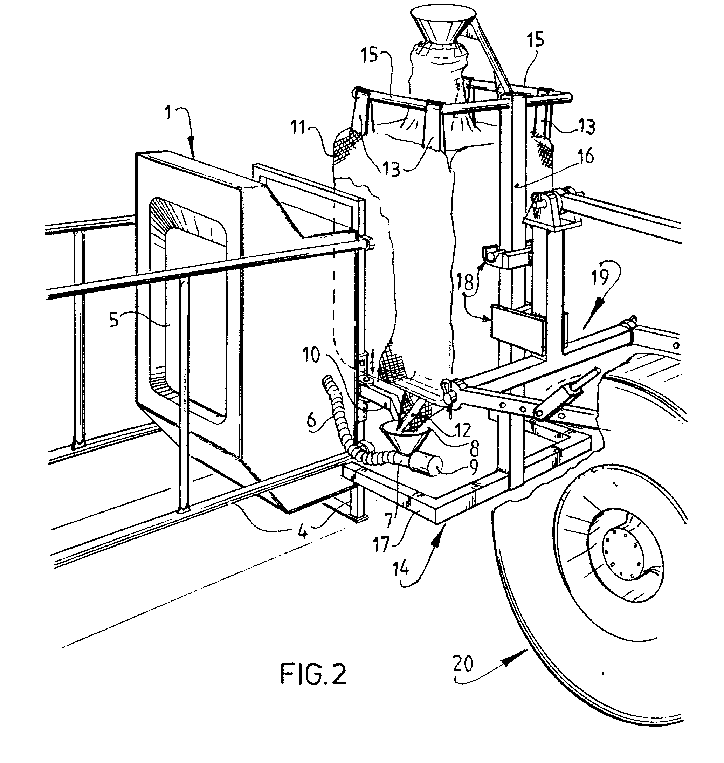

A device for supplying a cattle feed location 1 according to the invention is shown in fig. 2. The cattle feed location consists of a per se known bar fence 4 into which an animal, for example a cow, can enter such that it is placed with its head in the correct position for a feeding trough 5. Feeding trough 5 is a randomly shaped booth-like rear wall of bar fence 4 and can be connected via a flexible feed line 6 to a dosage device 7, on which is placed an inlet funnel 8.

The dosage device 7 can be of any random type and is for example a screw jack that is driven by an electric motor 9. The funnel 8 is attached together with the dosage device 7, 9 via a connecting rod 10 to the bar fence 4. The attachment can be such that the device 7, 9 with the inlet funnel 8 can be adjusted in height, width and depth. Provisioning is carried out by a holder 11 in which is packed a determined quantity of cattle feed, its outlet opening 12 being arranged above inlet funnel 8.

In the embodiment shown holder 11 takes the form of a sack manufactured from flexible material which is suspended with loops 13 in a frame 14 which can be manufactured from tubing or the like. The frame is at least provided with a horizontal bar 15 which is placed through loops 13, the bar 15 connecting to a vertical bar 16 which is provided at its lower end with a base bar 17 which extends horizontally.

The frame is formed with at least two such tubes, which are connected together by cross-bars so that frame 14 is self-supporting and self-contained.

According to the invention the frame is preferably provided with coupling means 18 which co-operate with the three-point lifting gear 19 of a schematically shown agricultural tractor 20.

With the described frame 14 it is possible to arrange the holder 11 with the outlet opening 12 above the inlet funnel 8 in a simple manner by maneuvering with the tractor 20 itself. At the correct position frame 14 can be placed with the foot 17 on the shed floor by lowering the three-point lifting gear 19, which can then be disconnected. By unblocking the trunk-like outlet opening 12 the cattle feed can run out of holder 11 into the inlet funnel 8 under the influence of gravity, so that the feed location 1 is provisioned for a determined period.

When the holder 11 is empty it can be replaced simply by lifting frame 14 using tractor 20 and the coupling to lifting gear 19 and driving away. Holder 11 can for example be refilled at silo 2 outside the shed, after which tractor 20 returns frame 14 with holder 11 to the feed location and re-positions it in the above described manner.

It is however also possible for the cattle farmer to stock a number of holders 11 with associated frame 14, and to replace an empty supply holder 11 directly with a full one. The empty supply holders 11 can be filled at the premises of the cattle feed supplier as required.

It will be apparent that with the above described supply system the cattle feed locations 1 do not necessarily have to be arranged in the shed, but can be freely disposed in the open meadow. Supplying will of course be carried out in a similar manner.

Other embodiments are possible within the framework of the invention. The holder 11 described can therefore also take the form of a container manufactured from rigid material.

CLAIMS

1. Method for provisioning one or more feed locations accessible to cattle, each provided with a feed bin equipped with a controlled dosage device, characterized in that the cattle feed is packed in a predetermined, preferably uniform, discrete quantity, is stored in this packed form, is transported using mechanical conveying means to said feed locations and is placed in the packaging at said feed location as supply for consumption.

2. Device for performing the method as claimed in claim 1, which device consists substantially of one or more feed locations each provided with a separately controllable dosage device, and means for supplying said feed locations, characterized in that each feed location is formed with an inlet opening connected to said dosage device and the supplying means are formed by a displaceable holder which forms the packaging of the cattle feed, said holder having an outlet opening suitable for co-operation with said inlet opening of said dosage device.

3. Device as claimed in claim 2, characterized by a frame bearing the holder, which frame is provided with coupling members co-operating with the three-point suspension of an agricultural tractor.

4. Device as claimed in claim 1 or 2, characterized in that the holder is a sack manufactured from flexible material.

5. Device as claimed in claim 1 or 2, characterized in that the holder is a container manufactured from rigid material.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | DE-A-2 008 972 (GAIL)<br>* Figures 1-6; page 2 * | 1,2 | A 01 K 5/02<br>B 65 D 88/30 |
| | --- | | |
| Y | US-A-2 731 950 (DAVIDSON)<br>* Figures 1,2; column 1, line 57 - column 2, line 19 * | 1,2 | |
| A | | 4 | |
| | --- | | |
| Y | US-A-4 029 051 (McKINNEY)<br>* Figure 5; column 3, lines 12-20 * | 1,2 | |
| A | | 5 | |
| | ----- | | |

**TECHNICAL FIELDS SEARCHED (Int Cl 4)**

A 01 K

The present search report has been drawn up for all claims

| Place of search | Date of completion of the search | Examiner |
|---|---|---|
| THE HAGUE | 02-04-1987 | VILBIG K |